# EUROPEAN PATENT APPLICATION

(11) **EP 3 189 996 A1**
(43) Date of publication of application: **12.07.2017**
(21) Application number: 16305005.7
(22) Date of filing: 05.01.2016
(51) Int. Cl.: B60K 11/08

(54) **MOTOR VEHICLE BODY COMPRISING SHUTTERS WITH THROUGHGOING CELLS AND ASSOCIATED VEHICLE**

(71) Applicant: Faurecia Bloc Avant, 92000 Nanterre (FR)
(72) Inventor: GILLARD, Laurent, Southfield, MI, 48076 (US); OUESLATI, Amir, ROCHESTER, MI 48307 (US); KOWALSKI, Franck, ROSEVILLE, MI 48066 (US)
(74) Representative: Remy, Vincent Noel Paul

(57) **Abstract**

This motor vehicle body has a front surface, the front surface defining at least one air inlet. The body further comprises at least one frame, the frame facing the air inlet allowing air to flow through the body along a longitudinal direction. At least one shutter (14) is mounted on the frame and extends across the frame, the shutter (14) extending along a main axis (X) along a transversal direction substantially perpendicular to the longitudinal direction. The shutter (14) comprises a first surface (32) and a second surface (34), the first surface (32) and the second surface (34) being connected by at least one transversal surface (36), the first surface (32), the second surface (34) and the transversal surface (36) delimiting a plurality of throughgoing cells (38). The shutter (14) is moveable in rotation around the main axis (X) between an open position and a closed position, no air flowing through the frame in the closed position.

## Description

The invention relates to a motor vehicle body, the body having a front surface, the front surface defining at least one air inlet, the body comprising at least one frame, the frame facing the air inlet allowing air to flow through the body along a longitudinal direction, at least one shutter being mounted on the frame and extending across the frame, the shutter extending along a main axis along a transversal direction substantially perpendicular to the longitudinal direction, the shutter comprising a first surface and a second surface, the first surface and the second surface being connected by at least one transversal surface, the first surface, the second surface and the transversal surface delimiting a plurality of throughgoing cells. The invention also relates to a motor vehicle comprising such a body.

Most motor vehicles comprise a grille defining an air inlet. The majority of the air passing through the air inlet then passes through the fins of a radiator located behind the grille to cool down the coolant inside the radiator, which in turn keeps the engine cool.

However, under given driving conditions, there is more air passing through the air inlet than is needed to keep the engine cool. Moreover, that excess of air passing through can add significant aerodynamic drag to the vehicle, increasing the amount of fuel used by the vehicle.

To adapt the amount of air passing through and reaching the radiator, motor vehicles can be equipped with active grille shutters mounted on a frame between the grille and the engine or forming the grille itself.

The shutters are generally blades having a substantially planar design.

The shutters are, for example, moveable in rotation around vertical or transversal axes of the frame to limit the amount of air passing through the shutters and subsequently reaching the engine.

When in a closed position, the shutters are sealed together to prevent air from flowing through the frame.

However, at high speed, the shutters have to resist to strong wind. Some shutters bend under the pressure in the closed position. Air can then flow through the frame even when the shutters are in the closed position, which increases the aerodynamic drag.

One of the aims of the invention is to improve the efficiency of the shutters.

According to the invention, this object is achieved by a motor vehicle body of the previous type, wherein the shutter is moveable in rotation around the main axis between an open position and a closed position, no air flowing through the frame in the closed position.

A first surface and a second surface connected by transversal surfaces are a stronger structure than the one of a usual shutter. The shutter resists to stronger pressures compared to the previously known shutters and do not bend in closed position when the vehicle is at high speed.

According to particular embodiments of the invention, the motor vehicle body includes one, several or all of the following features, in all technically possible combinations:
- in the closed position, the first surface extends along a plane comprising the frame, the second surface being located behind the first surface regarding the air inlet,
- the first and second surfaces are substantially parallel,
- the transversal surface and any of the first surface and the second surface define an angle between 30° and 60°,
- the shutter comprises a plurality of transversal surfaces, a plurality of throughgoing cells being defined by the transversal surfaces, the first surface and the second surface,
- at least one of the throughgoing cells has a trapezoidal section along a given plane, the given plane being transversal and longitudinal in the closed position,
- the trapezoidal section is isosceles,
- a plurality of shutters are mounted on the frame, the shutters being parallel to each other, each shutter comprising at least one transversal surface,
- in the closed position, the first surfaces of the shutters close the frame such that no air flows through the frame,
- the shutters are similar, the transversal surface being located similarly between the first surface and the second surface of each shutter, and
- the distance between the first and the second surfaces is equal to or smaller than the width of the first surface, the width of the first surface being the longitudinal dimension of the first surface when the shutter is in the open position.

The invention also relates to a motor vehicle having a body as defined above, an engine mounted within the body, a radiator for cooling the engine, air flowing through the frame being controlled by the shutter.

Other aspects and advantages of the invention will appear upon reading the following description, given by way of example and made in reference to the appended drawings, wherein:
- figure 1 is a perspective three-quarters front view of a part of a motor vehicle body according to an embodiment of the invention, the shutters being in a closed position,
- figure 2 is a perspective three-quarters back view of what is depicted in figure 1,
- figure 3 is a perspective front view of what is depicted in figure 1, the shutters being in an open position, and
- figure 4 is a perspective view of a single shutter of the embodiment of figure 1.

In the specification, the terms "longitudinal" and "vertical" are defined relative to the usual direction of a motor vehicle.

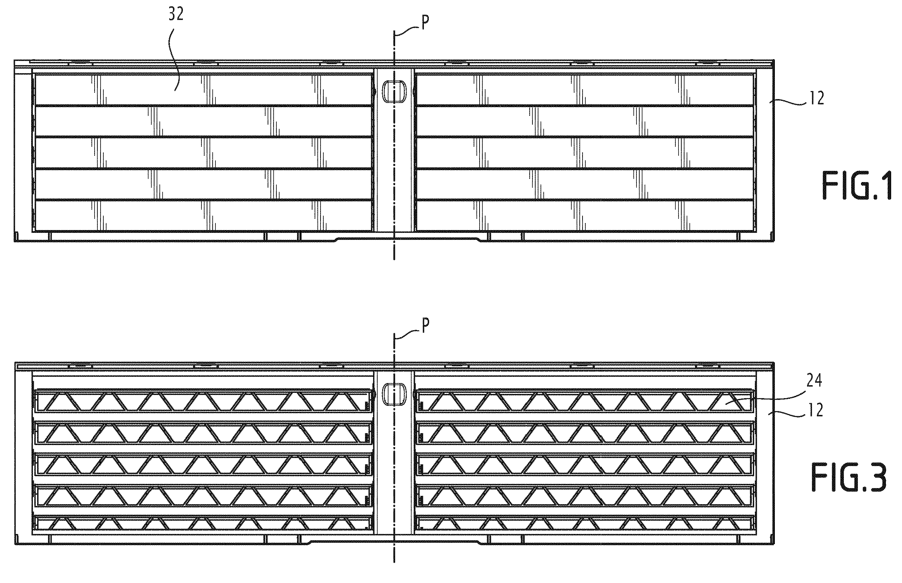

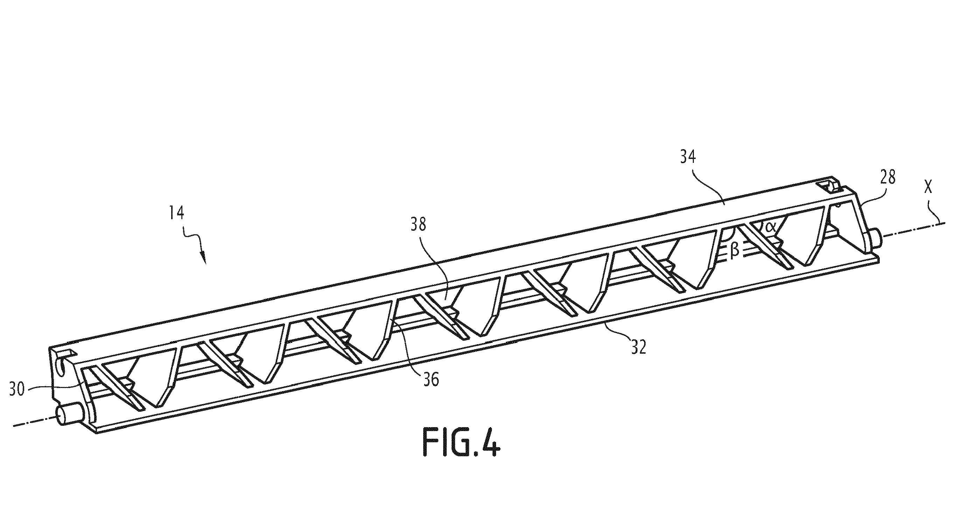

In reference to Figures 1, 2, 3 and 4, a motor vehicle body will be described.

The motor vehicle body is provided for a motor vehicle (not depicted) also comprising an engine mounted within the body and a radiator for cooling the engine.

The body 10 has a front surface (not depicted) defining at least one air inlet, for example equipped with a grille.

The air inlet is substantially at the centre in front of the radiator. The air inlet extends for example on 50% to 100% of the width of the front surface.

Alternatively, the air inlet is formed of several openings in the front surface, which is for example formed of a bumper fascia part.

The radiator is mounted between the air inlet and the engine.

The body 10 comprises at least one frame 12 and at least one shutter 14 mounted on the frame 12.

The frame 12 faces the air inlet and is located behind it, between the front surface and the radiator. The frame extends 12 along a vertical plane that is substantially parallel to the front surface.

According to an alternative embodiment, the frame 12 is formed of the same part that defines the air inlet, for example a bumper. In this case, the air inlet is formed in the frame and there is not intermediate part between the air inlet and the radiator, the shutters being mounted directly on the air inlet. In this alternative, the front surface is formed by the frame.

The frame 12 comprises two lateral edges 18 extending between a lower edge 20 and an upper edge 22.

The frame 12 is, for example, substantially rectangular.

A plane substantially equidistant to the two lateral edges 18 is called the main central plane P of the frame.

The edges 18, 20, 22 delimit an opening 24. The opening is for example of the same dimension as the air inlet.

The frame allows air to flow through the body along a longitudinal direction.

According to the embodiment shown in the figures, the frame 12 comprises one intermediate rod 26 extending across the opening 24.

The intermediate rod 26 is substantially parallel and equidistant to the lateral edges 18.

The main central pane P of the frame extends through the intermediate rod 26 and the frame 12 is substantially symmetrical relative to the main central plane P.

In this embodiment, the body 10 comprises a plurality of shutters 14 comprising a first end 28 and a second end 30.

The first end 28 is mounted on the intermediate rod 26 and the second end 30 on one of the lateral edges 18. This means that the body comprises two sets of shutters, each one of these sets extending in one of the openings defined by a lateral edge 18 and the intermediate rod 26.

The shutters 14 extend across the frame 12 along a respective main axis X substantially perpendicular to the longitudinal direction. The main axis X is the transversal direction defined relatively to the shutter.

The main axes of each shutter 14 are parallel to each other and to the lower and upper edges 20, 22. The shutters 14 are parallel to each other.

Each shutter 14 comprises at least a first surface 32, a second surface 34 and at least one transversal surface 36.

The first surface 32 and the second surface 34 are substantially rectangular surfaces.

The first surface 32 and the second surface 34 generally face each other.

The first surface 32 and the second surface 34 are substantially parallel. By substantially parallel, it is meant that the first surface 32 and the second surface 34 are parallel within 5°.

In the depicted embodiment, each shutter 14 comprises a plurality of transversal surfaces 36.

Each transversal surface 36 connects the first surface 32 and the second surface 34.

The first surface 32, the second surface 34 and the transversal surfaces 36 delimit a plurality of throughgoing cells 38.

Each shutter is moveable in rotation around its main axis X.

The rotation modifies the respective plane containing the first surface 32 and the second surface 34 of each shutter.

The shutters are moveable between a closed position and an open position.

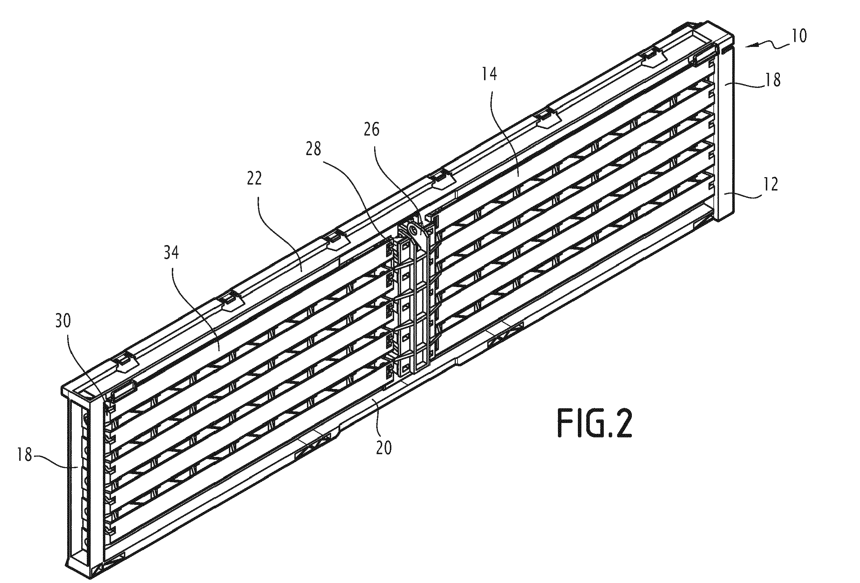

In the closed position, represented on figures 1 and 2, the shutters fill the opening 24 and prevent air from flowing through.

In the closed position, the first surface 32 and the second surface 34, for example, are substantially vertical.

In the closed position, the first surfaces 32 of the shutters 14 close the frame such that no air flows through the frame.In particular, in the closed position, the shutters are such that the air flowing through the air inlet hits the first surfaces. The first surfaces 32 are situated closely adjacent to one another, such that their edges are applied against each other to close the frame.

In the closed position, the first surface 32 extends along a plane comprising the frame 12. The second surface 34 is located behind the first surface 32 regarding the air inlet.

In the open position represented on figure 3, the first surface 32 and the second surface 34 are substantially longitudinal.

In the open position, the shutters let air flow through the opening 24.

The throughgoing cells 38 are open along the longitudinal direction when the shutter 14 is in the open position.

In one embodiment, the shutters 14 may be moveable in at least one intermediate open position between the open position and the closed position.

The dimension of the first surface 32 along the longitudinal direction when the shutter 14 is open, called the width of the first surface 32, is greater than the dimension of the second surface 34 along the longitudinal direction when the shutter 14 is open, called the width of the second surface 34.

In the closed position, the second surfaces 34 do not hamper the rotation of the shutters. The second surfaces 34 do not superimpose with each other.

The distance between the first surface 32 and the second surface 34 is equal or smaller to the width of the first surface 32, such that the rotation of the shutters do not hamper each other.

The distance between the first surface 32 and the second surface 34 is comprised between 15 mm and 45 mm.

The dimensions of the first surface 32 and the second surface 34 along the transversal direction are substantially equal.

The dimensions of each of the first surface 32 and the second surface 34 along the longitudinal direction, called their thickness, when the shutter 14 is closed, are comprised between 2 mm and 4mm.

The dimension of each transversal surface along the transversal direction, called its thickness, is comprised between 2 mm and 4 mm.

The distance between two adjacent transversal surfaces 36 is comprised between 5 mm and 15 mm, preferably between 5 mm and 10 mm. This distance is measured along the transversal direction equidistantly with the first surface 32 and the second surface 34.

At least one of the transversal surfaces 36 and any of the first surface 32 and the second surface 34 define an angle between 30° and 60°.

The transversal surfaces 36 at the ends 28, 30 of the shutters 14 are substantially perpendicular to the first and second surfaces 32, 34.

The transversal surfaces 36 which are not adjacent to the first and second ends 28, 30 of the shutter 14 are called central transversal surfaces. They define an angle between 30° and 60° with any of the first surface 32 and the second surface 34.

In the depicted embodiment, the central transversal surfaces 36 are placed alternatively in two divergent directions.

A first set of central transversal surfaces are situated such that the angle α defined by the transversal surfaces and the first surface 32 facing the first end 28 is strictly smaller than 90°. A second set of central transversal surfaces are situated such that the angle β defined by the transversal surfaces and the first surface 32 facing the first end 28 is strictly bigger than 90°. The first set and the second set are alternate.

At least one of the throughgoing cells has a trapezoidal section along a given plane. The given plane is transversal and longitudinal in the closed position.

In the depicted embodiment, all the throughgoing cells delimited by two central transversal surfaces 36, the first surface 32 and the second surface 34 have such a trapezoidal section.

The trapezoidal section is, for example, isosceles.

The throughgoing cells adjacent to the first and second ends 28, 30 of the shutter have a rectangular trapezoidal section along the given plane.

The first surface 32, the second surface 34 and the transversal surfaces 36 are made in a single piece. They are, for example, molded by injection.

The shutters 14 are for example similar and the transversal surfaces 36 of the different shutters 14 are located similarly on the shutters 14, such as to produce standardised pieces.

The rotation of the shutters 14 is, for example, controlled by an actuator connected to the electrical system of the vehicle via a connector.

According to an embodiment, the rotation of the shutters is synchronized such that the first surface of one shutter remains parallel to the first surface of the other shutters.

The opening or the closing of the shutters is decided according to the need for cooling the engine and/or other elements within the body. Temperature sensors of the engine or the other elements are, for example, connected to the electrical system of the vehicle. According to signals emitted by these sensors, the electrical system is arranged to control the rotation of the shutters accordingly.

In one embodiment, the frame 12 does not comprise an intermediate rod 26. A plurality of shutters 14 extend across the whole opening 24 between the lateral edges 18.

In another embodiment, the frame 12 comprises more than one intermediate rod 26 and more than two sets of shutters. In that case, some shutters are mounted on two different intermediate rods 26.

The structure of the shutters can resist to strong pressures. The shutters do not bend when the vehicle is subject to strong wings, for example due to high speed. Therefore the shutters are more efficient in the closed position and effectively reduce the aerodynamic drag to the vehicle. The amount of fuel used by the vehicle is reduced.

Moreover the shutters being more resistant, they don't need to be changed due to bending.

These advantages are economical for the vehicle owner.

## Claims

1. Motor vehicle body (10), the body having a front surface, the front surface defining at least one air inlet, the body comprising at least one frame (12), the frame (12) facing the air inlet allowing air to flow through the body (10) along a longitudinal direction, at least one shutter (14) being mounted on the frame (12) and extending across the frame (12), the shutter (14) extending along a main axis (X) along a transversal direction substantially perpendicular to the longitudinal direction, the shutter (14) comprising a first surface (32) and a second surface (34), the first surface (32) and the second surface (34) being connected by at least one transversal surface (36), the first surface (32), the second surface (34) and the transversal surface (36) delimiting a plurality of throughgoing cells (38), wherein the shutter (14) is moveable in rotation around the main axis (X) between an open position and a closed position, no air flowing through the frame (12) in the closed position.

2. Motor vehicle body according to claim 1 wherein, in the closed position, the first surface (32) extends along a plane comprising the frame (12), the second surface (34) being located behind the first surface (32) regarding the air inlet.

3. Motor vehicle body according to claim 1 or 2, wherein the first and second surfaces (32, 34) are substantially parallel.

4. Motor vehicle body according to any of claims 1 to 3, wherein the transversal surface (36) and any of the first surface (32) and the second surface (34) define an angle between 30° and 60°.

5. Motor vehicle body according to any of claims 1 to 4, wherein the shutter (14) comprises a plurality of transversal surfaces (36), a plurality of throughgoing cells (38) being defined by the transversal surfaces (36), the first surface (32) and the second surface (34).

6. Motor vehicle body according to claim 5, wherein at least one of the throughgoing cells (38) has a trapezoidal section along a given plane, the given plane being transversal and longitudinal in the closed position.

7. Motor vehicle according to claim 6, wherein the trapezoidal section is isosceles.

8. Motor vehicle body according to any of claims 1 to 7, wherein a plurality of shutters (14) are mounted on the frame (12), the shutters (14) being parallel to each other, each shutter (14) comprising at least one transversal surface (36).

9. Motor vehicle body according to claim 8 wherein, in the closed position, the first surfaces (32) of the shutters (14) close the frame (12) such that no air flows through the frame (12).

10. Motor vehicle body according to claim 8 or 9, wherein the shutters (14) are similar, the transversal surface (36) being located similarly between the first surface (32) and the second surface (34) of each shutter (14).

11. Motor vehicle body according to any of claims 1 to 10, wherein the distance between the first and the second surfaces (32, 34) is equal to or smaller than the width of the first surface (32), the width of the first surface (32) being the longitudinal dimension of the first surface (32) when the shutter is in the open position.

12. A motor vehicle having a body (10) according to any of claims 1 to 11, an engine mounted within the body (10), a radiator for cooling the engine, air flowing through the frame (12) being controlled by the shutter (14).
